# EUROPÄISCHE PATENTSCHRIFT

(11) **EP 3 268 653 B1**
(45) Veröffentlichungstag und Bekanntmachung des Hinweises auf die Patenterteilung: **11.09.2019**
(21) Anmeldenummer: 16706135.7
(22) Anmeldetag: 19.02.2016
(51) Int. Cl.: F16L 55/027, F16L 55/033, F16L 55/04, F16L 55/05, F15B 21/00

(54) **DÄMPFUNGSVORRICHTUNG**
DAMPING DEVICE
DISPOSITIF AMORTISSEUR

(30) Priorität: 10.03.2015 DE 102015003015; 10.03.2015 DE 102015003016
(43) Veröffentlichungstag der Anmeldung: 17.01.2018
(73) Patentinhaber: Hydac Technology GmbH, 66280 Sulzbach/Saar (DE)
(72) Erfinder: BALTES, Herbert, 66679 Losheim (DE); KLOFT, Peter, 56235 Ransbach-Baumbach (DE); BEHR, Robert, Marinus, 28844 Weyhe (DE); WAITSCHAT, Arne, 21129 Hamburg (DE); THIELECKE, Frank, 21614 Buxtehude (DE)
(74) Vertreter: Bartels und Partner, Patentanwälte
(86) Internationale Anmeldenummer: PCT/EP2016/000301
(87) Internationale Veröffentlichungsnummer: WO 2016/142032

(56) Entgegenhaltungen:
- DE-A1-102007 003 631
- DE-T2- 60 017 902
- DE-T2- 69 512 934
- DE-U1-202014 006 687
- US-A- 5 016 730
- US-A1- 2006 124 186

## Beschreibung

Die Erfindung betrifft eine Dämpfungsvorrichtung zum Dämpfen oder Vermeiden von Druckstößen, wie Pulsationen, in hydraulischen Versorgungskreisläufen, vorzugsweise in Form eines Silencers, mit den Merkmalen im Oberbegriff des Anspruchs 1.

Dämpfungsvorrichtungen dieser Art sind Stand der Technik. Solche Hydrodämpfer, auch Schalldämpfer oder Silencer genannt, dienen der Minderung von Schwingungen, die durch Druckpulsationen erzeugt sind, die einem betreffenden Hydrosystem periodisch aufgeprägt werden, insbesondere durch den Betrieb von Hydropumpen. Wie in dem Dokument DE 102 17 080 C1 aufgezeigt ist, weisen die bekannten Dämpfungsvorrichtungen dieser Gattung ein Dämpfungsgehäuse in Form eines Kreiszylinders auf, der an beiden axialen Endbereichen kugelförmig abgerundet ist, wobei sich Fluideinlass und Fluidauslass koaxial zur Zylinderachse an je einem Endbereich befinden. Als Dämpfungsraum, den der Fluidstrom von Fluideinlass zu Fluidauslass durchquert, ist bei diesen Dämpfungsvorrichtungen ein Dämpfungsrohr vorgesehen, das sich zwischen Fluideinlass und Fluidauslass koaxial erstreckt und in der Rohrwand Öffnungen zum das Rohr umgebenden Fluidraum aufweist. Entsprechend dem Zylinderdurchmesser ist der Fluidraum gegenüber der durch das Dämpfungsrohr vorgegebenen, axialen Durchströmungsrichtung radial erweitert.

Die DE 600 17 902 T2 beschreibt eine gattungsgemäße Dämpfungsvorrichtung zum Dämpfen oder Vermeiden von Druckstößen, wie Pulsationen in hydraulischen Versorgungskreisläufen, vorzugsweise in Form eines Silencers, mit einem einen Dämpfungsraum umgebenden Dämpfungsgehäuse, das mindestens einen Fluideinlass und mindestens einen Fluidauslass sowie einen zwischen Fluideinlass und Fluidauslass sich erstreckenden Fluidaufnahmeraum aufweist, wobei im Betrieb der Vorrichtung ein Fluidstrom in einer Durchströmungsrichtung vom Fluideinlass kommend in Richtung des Fluidauslasses den Dämpfungsraum durchquert, wobei sich zumindest Teile des Fluidaufnahmeraums in mindestens einer Ausdehnungsrichtung quer zur Durchströmungsrichtung erstrecken und wobei der Fluidaufnahmeraum einen scheibenartig ausgebildeten Hohlraum innerhalb des Dämpfungsgehäuses ausbildet.

Die DE 20 2014 006 687 U1, die DE 695 12 934 T2, die DE 10 2007 003 631 A1, die US 2006/0124186 A1 und die US 5 016 730 offenbaren weitere Dämpfungsvorrichtungen.

Ausgehend von diesem Stand der Technik stellt sich die Erfindung die Aufgabe, eine Dämpfungsvorrichtung der betrachteten Art zur Verfügung zu stellen, die bei einfacher Bauweise sich durch ein vorteilhaftes Betriebsverhalten auszeichnet.

Erfindungsgemäß ist diese Aufgabe durch eine Dämpfungsvorrichtung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass in Durchströmungsrichtung hintereinander mehr als ein Fluidaufnahmeraum angeordnet ist, dass der stromaufwärts erste und der stromabwärts letzte Fluidaufnahmeraum unmittelbar an den Fluideinlass bzw. den Fluidauslass angrenzen und dass jeder Fluidaufnahmeraum einen scheibenartig ausgebildeten Hohlraum innerhalb des Dämpfungsgehäuses ausbildet. Durch die direkte Anbindung der Fluidaufnahmeräume an Fluideinlass bzw. Fluidauslass und den dadurch bedingten Wegfall eines Dämpfungsrohres zeichnet sich die erfindungsgemäße Vorrichtung zum einen durch eine vereinfachte Bauweise aus. Zudem eröffnet das Vorhandensein mehr als eines Fluidaufnahmeraums die Möglichkeit, die Dämpfungsvorrichtung besser auf verschiedene Pulsationsfrequenzen abzustimmen. Dies ist insbesondere bei drehzahlvariablen Antrieben, beispielsweise in Form von Schraubenverdichtern, vorteilhaft, die einen großen Frequenzbereich als Anregungsspektrum erzeugen.

Die scheibenartig ausgebildeten Hohlräume können zylindrisch oder als Vieleck ausgebildet sein, jedoch kommen für eine gezielte Frequenzabstimmung auch andere Formen, etwa ovale Umrissformen, in Betracht.

Die jeweiligen Hohlräume können gleiche Volumina und gleiche Umrissformen aufweisen oder hinsichtlich Volumina und/oder Umrissform unterschiedlich ausgebildet sein.

Bei besonders vorteilhaften Ausführungsbeispielen können die Hohlräume von parallel zueinander verlaufenden Begrenzungswänden des Dämpfungsgehäuses mit abgeschlossen sein, wobei Teile des Fluideinlasses und des Fluidauslasses fluchtend zu diesen Begrenzungswänden im Dämpfungsgehäuse verlaufen und wobei der Durchmesser von als Dämpfungsgehäuse-Bohrungen ausgebildetem Fluideinlass und Fluidauslass gleich groß sein kann und dem Abstand zwischen den Begrenzungswänden entsprechen kann.

Mit besonderem Vorteil kann die Anordnung so getroffen sein, dass das Dämpfungsgehäuse mehrteilig ausgebildet ist und dass folgende Bauelemente vorgesehen sind:
- ein Bodenteil, das topfartige Mittenausnehmungen mit den einen Begrenzungswänden sowie den Fluideinlass und Fluidauslass aufnimmt, und
- flanschartige Deckelteile, die mit den anderen Begrenzungswänden, die Teil von Eingriffsstutzen sind, bei am Bodenteil festgelegten Deckelteilen in die Mittenausnehmungen des Bodenteils bündig eingreifen.

Für die Abdichtung der Hohlräume gegenüber der Umgebung kann am Eingriffsstutzen der Deckelteile eine Dichteinrichtung, insbesondere in Form eines in eine umlaufende Nut eingesetzten Dichtringes, angeordnet sein, der den jeweiligen Hohlraum als Bestandteil der Mittenausnehmungen gegenüber der Umgebung abdichtet.

Für eine druckdichte Ausbildung des Dämpfungsgehäuses können die Deckelteile, diametral zu ihrer Hochachse gegenüberliegend, mehrere Durchgriffsbohrungen aufweisen, die von Festlegeschrauben durchgriffen die Deckelteile am Bodenteil festlegen, wobei die Anordnung mit Vorteil so getroffen sein kann, dass die Festlegeschrauben unter Freilassen des Bereichs von Fluideinlass und Fluidauslass gleichmäßig entlang eines Außenumfangs der Deckelteile am Dämpfungsgehäuse angeordnet sind, der die scheibenartigen Fluidaufnahmeräume umfasst.

Bei vorteilhaften Ausführungsbeispielen sind zwei Hohlräume in Durchströmungsrichtung aufeinanderfolgend vorgesehen, die durch einen Fluiddurchgang miteinander verbunden sind, der sich, mit Fluideinlass und Fluidauslass des Dämpfungsgehäuses fluchtend, in einem Wandabschnitt des Bodenteils befindet und den gleichen Durchmesser wie Fluideinlass und Fluidauslass besitzt.

Für die Verbindung mit einem betreffenden Hydrosystem kann am Fluideinlass und/oder am Fluidauslass am Dämpfungsgehäuse eine Aufnahme für einen Dichtring vorgesehen sein, der den Fluideinlass und/oder Fluidauslass umfasst. An Drittbauteilen lässt sich das Dämpfungsgehäuse in der Art eines Festlegeblocks mittels mehrerer Festlegebolzen, die den Bereich des Fluideinlasses und/oder Fluidauslasses umgeben, festlegen.

Nachstehend ist die Erfindung anhand eines in der Zeichnung dargestellten Ausführungsbeispiels im Einzelnen erläutert. Es zeigen:
- Fig. 1: eine gegenüber einer praktischen Ausführungsform etwa im Maßstab 1:3 verkleinert gezeichnete perspektivische Schrägansicht eines Ausführungsbeispiels der erfindungsgemäßen Dämpfungsvorrichtung;
- Fig. 2: eine in doppelter Größe der Fig. 1 gezeichnete Draufsicht des Ausführungsbeispiels;
- Fig. 3: einen Längsschnitt des Ausführungsbeispiels entsprechend der Schnittlinie III-III von Fig. 2;
- Fig. 4: eine Teilansicht lediglich des den Fluidauslass aufweisenden Anschlussbereichs des Dämpfungsgehäuses des Ausführungsbeispiels; und
- Fig. 5: eine der Fig. 4 entsprechende Teilansicht des den Fluideingang aufweisenden Anschlussbereichs.

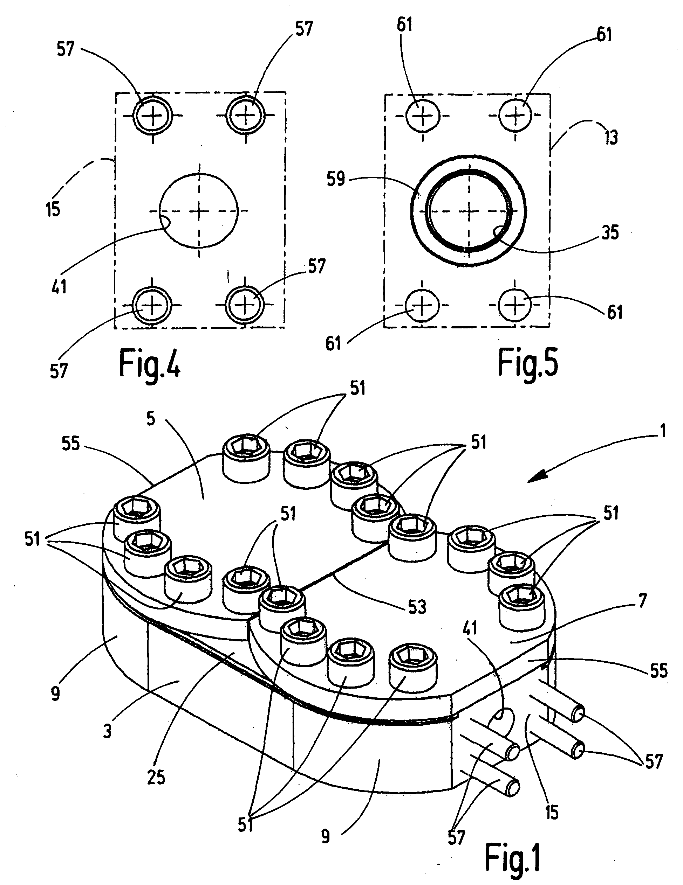

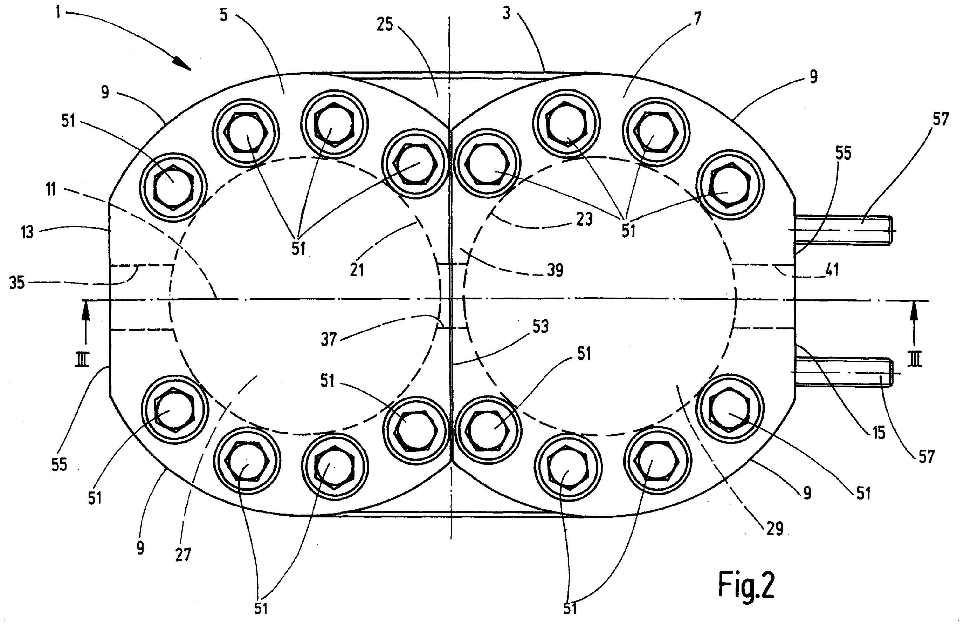

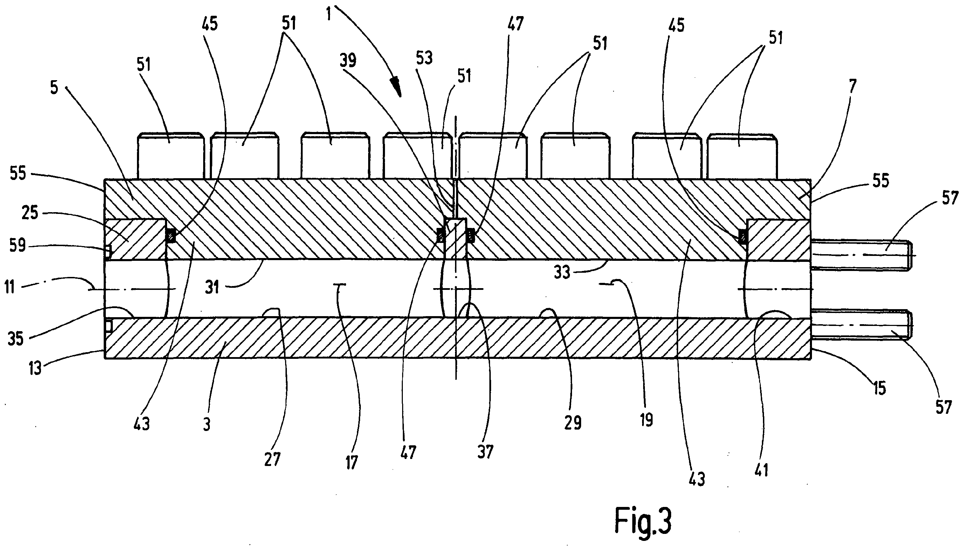

Unter Bezug auf die Zeichnung ist die Erfindung anhand des Ausführungsbeispiels eines sog. Silencers erläutert, der zur Minderung der Schwingungen vorgesehen ist, die durch Pulsationen in unter einem hohen Druck, etwa im Bereich von 200 bar, stehenden Hydraulikflüssigkeiten erzeugt sind. Dabei entspricht der grundsätzliche mechanische Aufbau einem für einen derartigen Einsatz vorgesehen Silencer, wie er als nachveröffentlichter Stand der Technik in der Patentanmeldung DE 10 2014 005 822.0 beschrieben ist. In den vorliegenden Figuren ist das Ausführungsbeispiel der Dämpfungsvorrichtung in zusammengebautem Zustand dargestellt. Das in diesen Figuren dargestellte Dämpfungsgehäuse 1 besteht, wie am besten aus Fig. 3 ersichtlich ist, aus drei Hauptteilen, nämlich einem Bodenteil 3 sowie aus Deckelteilen 5 und 7, die als Gleichteile gebildet sind. Wie die Fig. 1 und 2 zeigen, hat das Bodenteil 3 den Umriss eines abgerundete Eckbereiche 9 aufweisenden Rechtecks mit einer Längsachse 11, deren Verlauf der Durchströmungsrichtung des Fluids entspricht, das von der in den Figuren linksseitig gelegenen Endseite 13 in die Vorrichtung einströmt und diese an der gegenüberliegenden Endseite 15 verlässt. Das Bodenteil 3 weist zur Bildung von Fluidaufnahmeräumen 17 und 19 zwei Mittenausnehmungen 21 und 23 (s. Fig. 2) auf, die durch kreisrunde, topfartige Vertiefungen gebildet sind, die durch unvertiefte, umgebende Wandteile 25 (Fig. 3) des Bodenteils 3 umgrenzt sind. Die Mittenausnehmungen 21, 23 sind bodenseitig durch in gemeinsamer Ebene verlaufende Begrenzungswände 27 und 29 des Bodenteils 3 geschlossen. Zur Begrenzung der Fluidaufnahmeräume 17 und 19 in scheibenartiger Form bilden die Deckelteile 5 und 7 mit ihrer ebenen Unterseite obere Begrenzungswände 31 und 33, die bei am Bodenteil 3 angebrachten Deckteilen 5 und 7 in einer zu den Begrenzungswänden 27 und 29 parallelen Ebene verlaufen. An der in der Zeichnung linksseitig gelegenen Endseite 13 des Bodenteils 3 befindet sich der Fluideinlass 35, der mit den Begrenzungswänden 27 und 31 fluchtet, so dass der Durchmesser des Fluideinlasses 35 der Dicke des kreisscheibenförmigen Fluidaufnahmeraums 17 entspricht.

Der den zweiten Fluidaufnahmeraum 19 bildende kreisscheibenförmige Hohlraum, der in der Mittenausnehmung 23 des Bodenteils 3 gebildet ist, ist mit dem stromaufwärts ersten Fluidaufnahmeraum 17 über einen Fluiddurchgang 37 verbunden, der sich in dem mittig zwischen den Endseiten 13 und 15 gelegenen Wandabschnitt 39 des Bodenteils 3 befindet. Der Fluiddurchgang 37 ist koaxial zur Achse 11 und besitzt den gleichen Durchmesser wie der Fluideinlass 35. Beim gezeigten Ausführungsbeispiel sind beide Fluidaufnahmeräume 17 und 19 durch gleichartige kreisrunde Mittenausnehmungen 21 und 23 gebildet und weisen daher gleiche Volumina auf. In der in der Zeichnung links gelegenen Endseite 15 befindet sich im Wandteil 25 des Bodenteils 3 der Fluidauslass 41, der ebenso wie Fluideinlass 35 und Fluiddurchgang 37 zur Achse 11 und damit zur Durchströmungsrichtung koaxial ist und den gleichen Durchmesser wie Fluideinlass 35 und Fluiddurchgang 37 aufweist.

Wie der Fig. 3 entnehmbar ist, sind die Deckelteile 5 und 7 als flanschartig ausgebildete Gleichteile gestaltet. Von einer Oberseite ausgehend, die in dem am Bodenteil 3 angebrachten Zustand dessen Wandteile 25 sowie den Wandabschnitt 39 übergreifen, weisen die Deckelteile 5 und 7 jeweils einen vorspringenden Eingriffsstutzen 43 auf, der kreiszylindrisch ausgebildet ist und bei am Bodenteil 3 angebrachter Position passend in die Mittenausnehmungen 21 bzw. 23 eingreift. Dabei weist jeder Eingriffsstutzen 43 eine umlaufende Ringnut 45 auf, in der ein Dichtring 47 sitzt, der die Eingriffsstutzen 43 gegenüber den Wandteilen 25 sowie dem Wandabschnitt 39 des Bodenteils 3 abdichtet und damit die Fluidaufnahmeräume 17 und 19 gegen die Umgebung abdichtet.

Für die Verschraubung der Deckelteile 5, 7 mit dem Bodenteil 3 sind in diesem Gewindebohrungen ausgebildet, die in der Zeichnung nicht sichtbar sind. Diese sind für jeweils acht Befestigungsschrauben 51 jedes Deckelteils 5, 7 auf Teilkreisbögen angeordnet, die die Mittenausnehmungen 21 und 23 umgeben und mit denen die Deckelteile 5, 7 derart am Bodenteil 3 festlegbar sind, dass sie mit ihrer Flachseite 53 am mittleren Wandabschnitt 39 des Bodenteils 3 aneinander angrenzen. In dem der Flachseite 53 entgegengesetzten Bereich sind die Deckelteile 5, 7 so geformt, dass sie in angebrachtem Zustand an die Außenkontur des Bodenteils 3 angepasst sind, wobei an Fluideinlass 35 und Fluidauslass 41 Flachseiten 55 der Deckelteile 5, 7 jeweils mit der Endseite 13 und der Endseite 15 des Bodenteils 3 bündig sind und auch in den gerundeten Eckbereichen 9 eine absatzfreie Außenform gebildet ist.

Für die Anbringung des Dämpfungsgehäuses 1 an betreffenden Drittbauteilen sind beim gezeigten Ausführungsbeispiel an der in der Zeichnung rechtsseitig gelegenen Endseite 15 symmetrisch zum Fluidauslass 41 angeordnete Gewindebolzen 57 vorgesehen. Ferner ist an der gegenüberliegenden Endseite 13 am Fluideinlass 35 eine Aufnahmenut 59 für einen Dichtring ausgebildet. Für Anschlussverbindungen sind an der Endseite 13 Befestigungsbohrungen 61 in symmetrischer Anordnung zu Fluideinlass 35 angeordnet.

Es versteht sich, dass in entsprechender Weise an der dem Fluidauslass 41 zugeordneten Endseite 15 eine Dichtungsanordnung vorgesehen sein kann. Aufgrund der symmetrischen Gehäusebauform lassen sich Einlassseite und Auslassseite gegebenenfalls mit geänderten Dichtgeometrien auch gegeneinander tauschen. Aufgrund der scheibenförmigen Dämpfungsräume mit einer quer zur eigentlichen Durchflussrichtung erweiterten Kavität ist ein Silencer mit hoher Effizienz erreicht, der bezogen auf sein vorgebbares Flüssigkeitsvolumen ein geringes Gewicht besitzt. Ferner kommt es, wenn überhaupt, nur zu einer geringen Verstärkung zwischen dem Silencer und einer an diesen anschließbaren Hydropumpe.

Bei einer nicht näher dargestellten Ausführungsform der erfindungsgemäßen Dämpfungsvorrichtung besteht die Möglichkeit, die einzelnen, hintereinander angeordneten Dämpfungsräume 17, 19 vom Volumen her unterschiedlich auszugestalten, um dergestalt unterschiedlich große Dämpfungsräume zu schaffen, so dass einzelne Frequenzbänder mit unterschiedlichen Frequenzen wirksam bedämpft werden können, wobei ein Dämpfungsraum 17 dem einen Frequenzband und der andere Dämpfungsraum 19 dem demgegenüber anders gearteten Frequenzband zugeordnet werden kann.

Ferner können in weiterer Hintereinanderanordnung, was gleichfalls nicht dargestellt ist, noch ein dritter Dämpfungsraum und gegebenenfalls weitere Dämpfungsräume sich an die beiden ersten Dämpfungsräume 17, 19 gegebenenfalls mit geänderten Volumina anschließen, so dass ausgehend von einem Dämpfungsraum mit dem kleinsten Volumen zu einem mit dem medienführend angeschlossenen größten Dämpfungsraum innerhalb der Kette eine Entspannung im Druckverlauf des Medienstroms eintritt, so dass auch insoweit wirksame Dämpfungseffekte generiert werden können. Dies hat so keine Entsprechung im Stand der Technik.

## Patentansprüche

1. Dämpfungsvorrichtung zum Dämpfen oder Vermeiden von Druckstößen, wie Pulsationen, in hydraulischen Versorgungskreisläufen, vorzugsweise in Form eines Silencers, mit einem einen Dämpfungsraum (17, 19) umgebenden Dämpfungsgehäuse (1), das mindestens einen Fluideinlass (35) und mindestens einen Fluidauslass (41) sowie einen zwischen Fluideinlass (35) und Fluidauslass (41) sich erstreckenden Fluidaufnahmeraum (17, 19) aufweist, wobei im Betrieb der Vorrichtung ein Fluidstrom in einer Durchströmungsrichtung (11) vom Fluideinlass (35) kommend in Richtung des Fluidauslasses (41) den Dämpfungsraum (17, 19) durchquert, wobei sich zumindest Teile des Fluidaufnahmeraums (17, 19) in mindestens einer Ausdehnungsrichtung quer zur Durchströmungsrichtung (11) erstrecken, und wobei der Fluidaufnahmeraum einen scheibenartig ausgebildeten Hohlraum (17, 19) innerhalb des Dämpfungsgehäuses (1) ausbildet, **dadurch gekennzeichnet, dass** in Durchströmungsrichtung (11) hintereinander mehr als ein Fluidaufnahmeraum (17, 19) angeordnet ist, dass der stromaufwärts erste (17) und der stromabwärts letzte Fluidaufnahmeraum (19) unmittelbar an den Fluideinlass (35) bzw. den Fluidauslass (41) angrenzen und dass jeder Fluidaufnahmeraum einen scheibenartig ausgebildeten Hohlraum (17, 19) innerhalb des Dämpfungsgehäuses (1) ausbildet.

2. Dämpfungsvorrichtung nach Anspruch 1, **dadurch gekennzeichnet, dass** der jeweilige scheibenartige Hohlraum (17, 19) zylindrisch oder als Vieleck ausgebildet ist.

3. Dämpfungsvorrichtung nach Anspruch 1 oder 2, **dadurch gekennzeichnet, dass** Hohlräume (17, 19) gleicher Volumina und gleicher Umrissform vorgesehen sind.

4. Dämpfungsvorrichtung nach Anspruch 1 oder 2, **dadurch gekennzeichnet, dass** Hohlräume (17, 19) unterschiedlicher Volumina und/oder unterschiedlicher Umrissform vorgesehen sind.

5. Dämpfungsvorrichtung nach einem der vorstehenden Ansprüche, **dadurch gekennzeichnet, dass** die Hohlräume (17, 19) von parallel zueinander verlaufenden Begrenzungswänden (27, 29, 31, 33) des Dämpfungsgehäuses (1) mit abgeschlossen sind und dass Teile des Fluideinlasses (35) und des Fluidauslasses (41) fluchtend zu diesen Begrenzungswänden (27, 29, 31, 33) im Dämpfungsgehäuse (1) verlaufen.

6. Dämpfungsvorrichtung nach einem der vorstehenden Ansprüche, **dadurch gekennzeichnet, dass** der Durchmesser von als Dämpfungsgehäuse-Bohrungen ausgebildetem Fluideinlass (35) und Fluidauslass (41) gleich groß ist und dem Abstand zwischen den Begrenzungswänden (27, 29, 31, 33) entspricht.

7. Dämpfungsvorrichtung nach einem der vorstehenden Ansprüche, **dadurch gekennzeichnet, dass** das Dämpfungsgehäuse (1) mehrteilig ausgebildet ist
- mit einem Bodenteil (3), das topfartige Mittenausnehmungen (21, 23) mit den einen Begrenzungswänden (27, 29) sowie den Fluideinlass (35) und Fluidauslass (41) aufnimmt; und
- mit flanschartig ausgebildeten Deckelteilen (5, 7), die mit den anderen Begrenzungswänden (31, 33), die Teil von Eingriffsstutzen (43) sind, bei am Bodenteil (3) festgelegten Deckelteilen (5, 7) in die Mittenausnehmungen (21, 23) des Bodenteils (3) bündig eingreifen.

8. Dämpfungsvorrichtung nach Anspruch 7, **dadurch gekennzeichnet, dass** am Eingriffsstutzen (43) der Deckelteile (5, 7) eine Dichteinrichtung, insbesondere in Form eines in eine umlaufende Nut (45) eingesetzten Dichtringes (47) angeordnet ist, der den jeweiligen Hohlraum (17, 19) als Bestandteil der Mittenausnehmungen (21, 23) gegenüber der Umgebung abdichtet.

9. Dämpfungsvorrichtung nach Anspruch 7 oder 8, **dadurch gekennzeichnet, dass** die Deckelteile, diametral zu ihrer Hochachse gegenüberliegend, mehrere Durchgriffsbohrungen aufweisen, die von Festlegeschrauben (51) durchgriffen die Deckelteile (5, 7) am Bodenteil (3) festlegen.

10. Dämpfungsvorrichtung nach Anspruch 9, **dadurch gekennzeichnet, dass** die Festlegeschrauben (51) unter Freilassen des Bereichs von Fluideinlass (35) und Fluidauslass (41) gleichmäßig entlang eines Außenumfangs der Deckelteile (5, 7) am Dämpfungsgehäuse (1) angeordnet sind, der die scheibenartigen Fluidaufnahmeräume (17, 19) umfasst.

11. Dämpfungsvorrichtung nach einem der vorstehenden Ansprüche, **dadurch gekennzeichnet, dass** zwei Hohlräume (17, 19) in Durchströmungsrichtung (11) aufeinanderfolgend vorgesehen sind, die durch einen Fluiddurchgang (37) miteinander verbunden sind, der sich, mit Fluideinlass (35) und Fluidauslass (41) fluchtend, in einem Wandteilabschnitt (39) des Bodenteils (3) befindet und den gleichen Durchmesser wie Fluideinlass (35) und Fluidauslass (41) besitzt.

12. Dämpfungsvorrichtung nach einem der vorstehenden Ansprüche, **dadurch gekennzeichnet, dass** am Fluideinlass (35) und/oder am Fluidauslass (41) im Dämpfungsgehäuse (1) eine Aufnahme (59) für einen Dichtring vorgesehen ist, der den Fluideinlass (35) und/oder Fluidauslass (41) umfasst.

13. Dämpfungsvorrichtung nach einem der vorstehenden Ansprüche, **dadurch gekennzeichnet, dass** in der Art eines Festlegeblocks sich das Dämpfungsgehäuse (1) an Drittbauteilen mit mehreren Festlegebolzen (57) festlegen lässt, die den Bereich des Fluideinlass (35) und/oder Fluidauslass (41) umgeben.

## Claims

1. A damping device for damping or avoiding pressure surges, such as pulsations, in hydraulic supply circuits, preferably in the form of a silencer, with a damping housing (1) surrounding a damping chamber (17,19) which has at least one fluid inlet (35) and at least one fluid outlet (41) as well as a fluid receiving chamber (17, 19) extending between fluid inlet (35) and fluid outlet (41) wherein, during operation of the device, a fluid flow crosses the damping chamber (17, 19) in a throughflow direction (11), coming from the fluid inlet (35) in direction of the fluid outlet (41), wherein at least parts of the fluid receiving chamber (17, 19) extend in at least one extension direction transversely to the throughflow direction (11), and wherein the fluid receiving chamber forms a disk-like cavity (17, 19) inside the damping housing (1), **characterised in that** more than one fluid receiving chamber (17, 19) is arranged one after the other in throughflow direction (11) and the fluid receiving chamber (17) which is first upstream and the fluid receiving chamber (19) which is last downstream immediately adjoin the fluid inlet (35) or the fluid outlet (41), and that each fluid receiving chamber forms a disk-like cavity (17, 19) inside the damping housing (1).

2. The damping device according to claim 1, **characterised in that** the respective disk-like cavity (17, 19) is formed cylindrical or as a polygon.

3. The damping device according to claim 1 or 2, **characterised in that** cavities (17, 19) of the same volumes and the same contours are provided.

4. The damping device according to claim 1 or 2, **characterised in that** cavities (17, 19) of different volumes and/or different contours are provided.

5. The damping device according to one of the preceding claims, **characterised in that** the cavities (17, 19) are closed by boundary walls (27, 29, 31, 33) of the damping housing (1) extending parallel to one another and that parts of the fluid inlet (35) and parts of the fluid outlet (41) extend in alignment with these boundary walls (27, 29, 31, 33) in the damping housing (1).

6. The damping device according to one of the preceding claims, **characterised in that** the fluid inlet (35) and the fluid outlet (41) formed as damping housing bores have identical diameters, and said diameter corresponds to the distance between the boundary walls (27, 29, 31, 33).

7. The damping device according to one of the preceding claims, **characterised in that** the damping housing (1) is formed in several pieces,
- with a base part (3), which receives pot-like central recesses (21, 23) with the one set of boundary walls (27, 29) as well as the fluid inlet (35) and fluid outlet (41);
- and with flange-like cover parts (5, 7) which, with the other boundary walls (31, 33), which are part of engagement pieces (43), engage in a flush manner in the central recesses (21, 23) of the base part (3) in the case of cover parts (5, 7) fixed to the base part (3).

8. The damping device according to claim 7, **characterised in that** a sealing device, in particular in the form of a sealing ring (47) inserted into a circumferential groove (45), is arranged on the engagement piece (43) of the cover parts (5, 7), which sealing ring seals the respective cavity (17, 19) as a component of the central recesses (21, 23) vis-à-vis the environment.

9. The damping device according to claim 7 or 8, **characterised in that**, diametrically opposite their vertical axis, the cover parts have several penetration bores which, penetrated by fixing screws (51), fix the cover parts (5, 7) to the base part (3).

10. The damping device according to claim 9, **characterised in that**, by leaving the region of the fluid inlet (35) and the fluid outlet (41) free, the fixing screws (51) are arranged uniformly along an external circumference of the cover parts (5, 7) on the damping housing (1), which surrounds the disk-like fluid receiving chambers (17, 19).

11. The damping device according to one of the preceding claims, **characterised in that** two cavities (17, 19) are provided consecutively in the throughflow direction (11), which are connected to one another by a fluid passage (37) which, aligned with the fluid inlet (35) and fluid outlet (41), is located in a wall segment (39) of the base part (3) and has the same diameter as the fluid inlet (35) and the fluid outlet (41).

12. The damping device according to one of the preceding claims, **characterised in that** a receptacle (59) for a sealing ring is provided at the fluid inlet (35) and/or at the fluid outlet (41) in the damping housing (1), which sealing ring surrounds the fluid inlet (35) and/or the fluid outlet (41).

13. The damping device according to one of the preceding claims, **characterised in that**, in the manner of a fixing block, the damping housing (1) can be fixed to third-party components with several fixing bolts (57) which surround the region of the fluid inlet (35) and/or the fluid outlet (41).

## Revendications

1. Dispositif d'amortissement pour amortir ou empêcher des coups de bélier, comme des pulsations, dans des circuits d'alimentation hydrauliques, de préférence sous la forme d'un silencieux, comprenant une enveloppe (1) d'amortissement, qui entoure un espace (17, 19) d'amortissement et qui a au moins une entrée (35) de fluide et au moins une sortie (41) de fluide, ainsi qu'un espace (17, 19) de réception de fluide s'étendant entre l'entrée (35) de fluide et la sortie (41) de fluide, dans lequel, lorsque le dispositif fonctionne, un courant de fluide, venant dans une direction (11) de passage de l'entrée (35) de fluide, traverse l'espace (17, 19) d'amortissement en direction de la sortie (41) de fluide, dans lequel au moins des parties de l'espace (17, 19) de réception de fluide s'étendent dans au moins une direction d'étendue, transversalement à la direction (11) de passage, et dans lequel l'espace de réception de fluide constitue, à l'intérieur de l'enveloppe (1) d'amortissement, un creux (17, 19) de type en disque, **caractérisé en ce que**, les uns derrière les autres dans la direction (11) de passage, il est disposé plus d'un espace (17, 19) de réception de fluide, **en ce que** le premier (17) en amont et le dernier, en aval, espace (19)de réception de fluide sont immédiatement voisins de l'entrée (35) de fluide et, respectivement, de la sortie (41) de fluide, et **en ce que** chaque espace de réception de fluide constitue, à l'intérieur de l'enveloppe (1) d'amortissement, un creux (17, 19) de type en disque.

2. Dispositif d'amortissement suivant la revendication 1, **caractérisé en ce que** le creux (17, 19) de type en disque est cylindrique ou polygonal.

3. Dispositif d'amortissement suivant la revendication 1 ou 2, **caractérisé en ce qu'**il est prévu des creux (17, 19) de même volume et de même forme de contour.

4. Dispositif d'amortissement suivant la revendication 1 ou 2, **caractérisé en ce qu'**il est prévu des creux (17, 19) de volume différent et de forme de contour différente.

5. Dispositif d'amortissement suivant l'une des revendications précédentes, **caractérisé en ce que** les creux (17, 19) sont fermés par des parois (27, 29, 31, 33) de démarcation, parallèles entre elles, de l'enveloppe (1) d'amortissement, et **en ce que** des parties de l'entrée (35) de fluide et de la sortie (41) de fluide s'étendent en alignement avec ces parois (27, 29, 31, 32) de démarcation de l'enveloppe (1) d'amortissement.

6. Dispositif d'amortissement suivant l'une des revendications précédentes, **caractérisé en ce que** le diamètre de l'entrée (35) de fluide et de la sortie (41) de fluide, constitué sous la forme de trous de l'enveloppe d'amortissement, est pareil et correspond à la distance entre les parois (27, 29, 31, 33) de démarcation.

7. Dispositif d'amortissement suivant l'une des revendications précédentes, **caractérisé en ce que** l'enveloppe (1) d'amortissement est constituée en plusieurs parties, en ayant
- une partie (3) de fond, qui reçoit des évidements (21, 23) médians de type en cuvette, ayant les une parois (27, 29) de démarcation, ainsi que l'entrée (35) de fluide et la sortie (41) de fluide ; et
- des parties (5, 7) de couvercle de type à rebord, qui, avec les autres parois (31, 33) de démarcation faisant partie de tubulures (43) de pénétration, pénètrent, lorsque les parties (5, 7) de couvercle sont fixées à la partie (3) de fond, au ras dans les évidements (21, 23) médians de la partie (3) de fond.

8. Dispositif d'amortissement suivant la revendication 7, **caractérisé en ce que**, sur la tubulure (43) de pénétration des parties (5, 7) de couvercle, est monté un dispositif d'étanchéité, notamment sous la forme d'un joint (47) torique inséré dans une rainure (45) faisant tout le tour, qui, en tant que partie constitutive des évidements (21, 23) médians, rend les creux (17, 19) étanche vis-à-vis de l'atmosphère extérieure.

9. Dispositif d'amortissement suivant la revendication 7 ou 8, **caractérisé en ce que** les parties de couvercle ont, en étant diamétralement opposées par rapport à leur axe vertical, plusieurs trous de passage, qui, traversés par des vis (51) de fixation, fixent les parties (5, 7) de couvercle à la partie (3) de fond.

10. Dispositif d'amortissement suivant la revendication (9) **caractérisé en ce que** les vis (51) de fixation sont disposées sur l'enveloppe (1) d'amortissement, en laissant libre la partie de l'entrée (35) de fluide et de la sortie (41) de fluide, uniformément suivant un pourtour extérieur des parties (5, 7) de couvercle, enveloppe (1), qui entoure les espaces (17, 19) de réception de fluide de type en disque.

11. Dispositif d'amortissement suivant l'une des revendications précédentes, **caractérisé en ce qu'**il est prévu deux creux (17, 19) se succédant dans la direction (11) de passage du courant, qui communiquent entre eux par un passage (37) pour du fluide, qui, en alignement avec l'entrée (35) de fluide et la sortie (41) de fluide, se trouve dans une partie (39) de paroi de la partie (35) de fond et a le même diamètre que l'entrée (35) de fluide et la sortie (41) de fluide.

12. Dispositif d'amortissement suivant l'une des revendications précédentes, **caractérisé en ce qu'**à l'entrée (35) de fluide et/ou à la sortie (41) de fluide est prévu, dans l'enveloppe (1) d'amortissement, un logement (59) d'un joint torique, qui entoure l'entrée (35) de fluide et/ou la sortie (41) de fluide.

13. Dispositif d'amortissement suivant l'une des revendications précédentes, **caractérisé en ce qu'**à la manière d'un bloc de fixation, l'enveloppe (1) d'amortissement peut être fixée à des pièces tierces par plusieurs boulons (57) de fixation, qui entourent la partie de l'entrée (35) de fluide et/ou la sortie (41) de fluide.
